# EUROPÄISCHE PATENTSCHRIFT

(11) **EP 2 044 573 B1**
(45) Veröffentlichungstag und Bekanntmachung des Hinweises auf die Patenterteilung: **25.02.2015**
(21) Anmeldenummer: 07730163.8
(22) Anmeldetag: 14.06.2007
(51) Int. Cl.: G06T 7/00

(54) **ÜBERWACHUNGSKAMERA, VERFAHREN ZUR KALIBRIERUNG DER ÜBERWACHUNGSKAMERA SOWIE VERWENDUNG DER ÜBERWACHUNGSKAMERA**
MONITORING CAMERA, METHOD FOR CALIBRATING THE MONITORING CAMERA, AND USE OF THE MONITORING CAMERA
CAMÉRA DE SURVEILLANCE, PROCÉDÉ D'ÉTALONNAGE ET D'UTILISATION DE LA CAMÉRA DE SURVEILLANCE

(30) Priorität: 18.07.2006 DE 102006033147
(43) Veröffentlichungstag der Anmeldung: 08.04.2009
(73) Patentinhaber: Robert Bosch GmbH, 70442 Stuttgart (DE)
(72) Erfinder: NIEHSEN, Wolfgang, 31162 Bad Salzdetfurth (DE); NIEM, Wolfgang, 31141 Hildesheim (DE); LOOS, Hartmut, 31141 Hildesheim (DE)
(86) Internationale Anmeldenummer: PCT/EP2007/055897
(87) Internationale Veröffentlichungsnummer: WO 2008/009520

(56) Entgegenhaltungen:
- US-A1- 2004 164 858
- US-A1- 2006 033 813
- OLSEN B D ET AL: "Calibrating a camera network using a domino grid" PATTERN RECOGNITION, ELSEVIER, KIDLINGTON, GB, Bd. 34, Nr. 5, Mai 2001 (2001-05), Seiten 1105-1117, XP004321327 ISSN: 0031-3203

## Beschreibung

### Stand der Technik

Die Erfindung betrifft eine Überwachungskamera, wobei die Überwachungskamera zur Überwachung an einer stationären Überwachungsposition positioniert und/oder positionierbar ist und eine Kalibrierungshilfsvorrichtung aufweist, sowie ein Verfahren zur Kalibrierung einer oder der Überwachungskamera und eine Verwendung einer oder der Überwachungskamera für die Überwachung einer stationären Überwachungsposition.

Videoüberwachungssysteme werden üblicherweise zur Überwachung von Straßen, Kreuzungen, Plätzen aber auch von öffentlichen Gebäuden, Museen, Gefängnissen eingesetzt. Derartige Videoüberwachungssysteme bestehen in der Regel aus einer Vielzahl von Überwachungskameras, die an verschiedenen Positionen angeordnet sind sowie aus einer Überwachungszentrale, in der die von den Überwachungskameras aufgenommenen Bildströme zusammengeführt werden. Die auf diese Weise gesammelten Bilddatenströme werden entweder durch Überwachungspersonal beispielsweise Online überwacht oder automatisiert ausgewertet. Im letztgenannten Fall werden üblicherweise Bildverarbeitungsalgorithmen zur Auswertung der aufgenommenen Videosequenzen eingesetzt. Oftmals werden dabei bewegte Objekte von dem im Wesentlichen statischen Szenenhintergrund getrennt, über die Zeit verfolgt, und bei relevanten Bewegungen Alarme ausgelöst. Dabei nutzen diese Bildverarbeitungsalgorithmen die so genannte Objektsegmentierung, wobei die Bildunterschiede zwischen dem aktuellen Kamerabild und einem so genannten Szenenreferenzbild, welches den statischen Szenenhintergrund modelliert, ausgewertet werden.

Als Ergebnis erhält man bei derartigen Bildverarbeitungsalgorithmen Informationen über die Größe der segmentierten Bildbereiche/Objekte und die Geschwindigkeit der segmentierten Bildbereiche/Objekte in der Einheit Pixel beziehungsweise zurückgelegte Pixel pro Sekunde.

***Die Druckschrift*** US 2006/0033813 A1 ***beschreibt ein Doppelkamerasystem sowie Maßnahmen zur Korrelierung der Blickwinkel einer Übersichtskamera und einer Detailkamera des Doppelkamerasystems. In einer Ausführungsform weist das System auch eine GPS-Einrichtung auf, wobei die GPS-Einrichtung in einer Situation verwendet** wird, **bei der die Übersichtskamera und die Detailkamera voneinander beabstandet sind, um durch die Erfassung der absoluten Positionen die relative Position der beiden Kameras zueinander zu ermitteln.***

***Die Druckschrift US*** 2004/0164858 A1 ***betrifft ein RFID- und Videoverfolgungssystem*, *wobei eine Kalibrierung des Videoverfolgungssystems über den Einsatz von transportablen RFID-Tags verfeinert wird*.**

***Der wissenschaftliche Artikel*** Olsen B.D. et al.: "Calibrating a camera network using a domino grid" Pattern Recognition, Elsevier, Kidlington, GB, Bd. 34, Nr. 5, Mai 2001, Seiten 1105 - 1117, ISSN: 0031 - 3203 ***beschreibt ein System mit der Möglichkeit der Kalibrierung von Überwachungskameras durch die Erfassung von verschiedenen Mustern durch die Überwachungskameras*, *wobei die Muster in dem überwachten Umgebungsbereich platziert werden.***

Videoüberwachungssysteme, die dagegen die Ergebnisse für die Bildbereiche/Objekte in der Szene in metrischen Größen, wie zum Beispiel Längen in Meter und Geschwindigkeit in Meter pro Sekunde, oder die absolute und/oder relative Positionierung in einem Kameranetzwerk ausgeben, benötigen die Kenntnis von Kameraparametem wie z.B. die Position, die Orientierung und den Öffnungswinkel der Kamera(s). Diese Parameter werden meist beim Installationsprozess aufwendig manuelle vermessen, zum Beispiel werden spezielle Pattern (Beispielsmuster) eingesetzt, oder Personen laufen vor der Videokamera hin und her.

Aus einem anderen technischen Bereich, nämlich der Aufnahme von Panoramaluftbildern von einem Flugzeug aus, sind Vorrichtungen bekannt, die neben den eigentlichen Videobildern beziehungsweise -sequenzen während des Flugs weitere Daten mittels Messsensoren aufnehmen. So zeigen sowohl die WO 03/021187 A2 als auch die DE 696 27 487 T2 ein digitales Kamerasystem, welches eine spezielle Panoramakamera sowie eine Kalibrierungseinheit umfasst, wobei die Kalibrierungseinheit GPS-Sensoren sowie ein IMU (Inertial-Measurement-Unit) zur Aufnahme von Bewegungsinformationen aufweist, und wobei auf Basis der Verschmelzung der GPS- und der IMU-Daten die mittels der Kamera aufgenommenen Bilder zueinander synchronisiert werden oder eine Aufnahme eines Bildes auslöst wird. Der genannte druckschriftliche Stand der Technik betrifft ausschließlich den besonderen Fall, dass die Panoramakameras während der Aufnahme relativ zu dem aufzunehmenden Gebiet bewegt werden. Als nächstkommender Stand der Technik werden im Folgenden die bekannten Videoüberwachungssysteme angesehen.

### Offenbarung der Erfindung

Die Erfindung betrifft eine Überwachungskamera mit den Merkmalen des Anspruchs 1, ein Verfahren zur Kalibrierung einer Überwachungskamera mit den Merkmalen des Anspruchs 8 sowie eine Verwendung einer Überwachungskamera mit den Merkmalen des Anspruchs 10. Bevorzugte oder vorteilhafte Ausführungsformen sind in den Unteransprüchen beansprucht beziehungsweise in der nachfolgenden Beschreibung offenbart.

Die erfindungsgemäße Überwachungskamera ist konstruktiv so ausgebildet, dass diese zur Überwachung an einer stationären Überwachungsposition positionierbar und/oder positioniert ist. Die Überwachungsposition ist insbesondere stationär gegenüber dem von der Überwachungskamera überwachten Gebiet. Das heißt, insbesondere während des Überwachungsbetriebs wird die relative Lage von Überwachungsposition und Überwachungsgebiet nicht verändert. Die Überwachungskamera ist bevorzugt als CCD-Kamera ausgebildet, kann prinzipiell aber auf jeder beliebigen Kameratechnologie basieren. Insbesondere ist sowohl der Einsatz fest installierter PZT-Kameras (Pan/Tilt/Zoom) aber auch der Einsatz von Kameras mit starrem Blickfeld ist im Rahmen der Erfindung. Auch die optische Ausstattung der Überwachungskamera ist im Allgemeinen frei wählbar, das heißt die Überwachungskamera kann zum Beispiel mit einem Weitwinkelobjektiv, aber auch mit einem 360°-Beobachtungsaufsatz realisiert sein.

Eine Kalibrierungshilfsvorrichtung ist vorgesehen, um die Kalibrierung der Überwachungskamera zu unterstützen. Die Kalibrierung betrifft die Bestimmung von Umrechnungsfaktoren zwischen direkt aus den Bildern der Überwachungskamera entnommenen Größen, insbesondere Pixel oder Pixel pro Sekunde, in metrische oder dazu äquivalente Größen, wie zum Beispiel Meter beziehungsweise Meter pro Sekunde, wobei die Umrechnungsfaktoren insbesondere abbildungsbedingte und/öder perspektivische Effekte berücksichtigen.

Erfindungsgemäß ist vorgesehen, dass die Kalibrierungshilfsvorrichtung zur Ermittlung der stationären Überwachungsposition der Überwachungskamera ausgebildet ist. Die stationäre Überwachungsposition umfasst die absolute Position und Orientierung der Kamera. Insbesondere ist die Kalibrierungshilfsvorrichtung zur Selbstortung der Überwachungskamera ausgebildet. Bevorzugt ist die Überwachungskamera so ausgebildet, dass die Ermittlung der stationären Überwachungsposition asynchron und/oder unsynchronisiert zu der Bildaufnahme im Überwachungsbetrieb erfolgt.

Der Erfindung liegt dabei die Überlegung zugrunde, dass unter Einsatz einer derartigen Kalibrierungshilfsvorrichtung die Überwachungskamera unmittelbar ihre absolute beziehungsweise relative Position und Orientierung kennt. Über eine Recheneinheit können somit Videoüberwachungssysteme auch mit mehreren Überwachungskameras in kurzer Zeit zum Beispiel bezüglich einer digitalen Umgebungskarte kalibriert werden. Die zur Kalibrierung benötigten Daten werden insbesondere ohne Benutzerinteraktion mit Hilfe der als Sensor- und Recheneinheit ausgebildeten Kalibrierungshilfsvorrichtung ermittelt und stehen dann für die Bildanalyse zur Verfügung. Auf diese Weise wird der heute notwendige hohe manuelle Aufwand bei der Kalibrierung von Überwachungskameras deutlich verringert, insbesondere indem die absolute oder relative Orientierung und Position und/oder der Öffnungswinkel der Überwachungskamera automatisch mit minimalem Aufwand zuverlässig bestimmt wird.

Die Überwachungskamera weist ein Kalibriermodul zur Kalibrierung der Überwachungskamera auf Basis der stationären Überwachungsposition auf. Dieses Kalibriermodul ist zur Zusammenführung von Umgebungsinformationen in Form von digitalen Umgebungskarten oder Gebäudeplänen, mit der durch die Kalibrierungshilfsvorrichtung ermittelten stationären Überwachungsposition der Überwachungskamera ausgebildet. Durch Auswertung der Umgebungsinformationen, insbesondere der digitalen Umgebungskarte, ist die Überwachungskamera, insbesondere das Beobachtungsfeld der Überwachungskamera, in einfacher Weise kalibrierbar. Das Kalibriermodul ist bevorzugt in der Überwachungskamera integriert oder separat z.B. über eine Datenverbindung verschaltet mit der Überwachungskamera und/oder dem Kalibrierungshilfsmodul verbunden.

Bevorzugt ist die Kalibrierungshilfsvorrichtung als integraler Bestandteil der Überwachungskamera ausgebildet. Auf diese Weise kann ein Videoüberwachungssystem mit mehreren Überwachungskameras innerhalb kürzester Zeit kalibriert werden, da die einzelnen Überwachungskameras automatisiert ihre stationäre Überwachungsposition bestimmen, so dass der Installationsaufwand der für die Kalibrierung entsteht minimiert ist.

Bei einer alternativen Ausführungsform ist das Kalibrierungshilfsmodul im oder auf die Überwachungskamera reproduzierbar abnehmbar und/oder aufsetzbar ausgebildet. Sowohl die Überwachungskamera als auch die Kalibrierungshilfsvorrichtung umfasst jeweils einen zueinander komplementär ausgebildeten mechanischen Anschluss, der eine reproduzierbare und/oder kalibrierte Montage der Kalibrierungshilfsvorrichtung an der Kamera erlaubt. Eine derart ausgebildete Kalibrierungshilfsvorrichtung kann nach erfolgte Kalibrierung von der Überwachungskamera entfernt und für weitere Kameras verwendet werden, so dass die Kosten für die einzelnen Überwachungskameras niedrig gehalten werden. Bevorzugt ist die Kalibrierungshilfsvorrichtung zur Kommunikation mit der Überwachungskamera ausgebildet, insbesondere über Internet, analoges Videokabel, seriell, USB, Firewire oder ähnliches oder über ein spezielles Interface, wobei insbesondere eine geringe Bandbreite ausreichend erscheint.

In einer alternativen Ausführungsform wird die stationäre Überwachungsposition und/oder die Kalibrierungsinformation für die Überwachungskamera in der Kalibrierungshilfsvorrichtung abgespeichert und zentral in einer Auswertungsvorrichtung ausgelesen. Letztgenannte Alternative ist besonders vorteilhaft für bereits existierende Installationen mit bereits schon verbauten Überwachungskameras.

Vorzugsweise ist vorgesehen, dass die ermittelte stationäre Überwachungsposition und/oder Kalibrierungsinformationen in der Überwachungskamera verarbeitet wird bzw. werden, so dass diese beispielsweise als Smartkamera zur Ausgabe von Ergebnissen in realen, metrischen Größen ausgebildet ist und/oder von der Überwachungskamera an beispielsweise eine oder die insbesondere zentrale Auswertungsvorrichtung weitergeleitet und/oder in der Kalibrierungshilfsvorrichtung zwischengespeichert und später beispielsweise von einer oder der zentralen Auswerteeinrichtung ausgelesen und verarbeitet wird bzw. werden.

Bei einer möglichen Ausbildung der Erfindung ist die Überwachungskamera zur Selbstüberwachung ausgebildet und zwar anhand eines Vergleichs der Überwachungsposition und/oder Kalibrierungsinformationen von zwei oder mehr unterschiedlichen Zeitpunkten, die beispielsweise mehr als 1 Stunde oder einen Tag auseinanderliegen .

In einer weiteren bevorzugten Ausführungsform weist die Kalibrierungshilfsvorrichtung Mittel zur Ermittlung der absoluten Position und/oder der Orientierung und/oder des Öffnungswinkels der Überwachungskamera auf. Die absolute Position wird in in Weltkoordinaten ausgedrückt. Die absolute Orientierung wird bevorzugt ebenfalls in Weltkoordinaten und/oder in Kompasswinkeln ausgedrückt.

Insbesondere umfassen die Mittel zur Ermittlung von absoluten Positionsinformationen, also der absoluten Position, Orientierung und/oder Öffnungswinkel, eine beliebige Auswahl der nachfolgenden Einrichtungen:
Einrichtung zur Erfassung von GPS- und/oder DGPS-Signalen, also zum Beispiel GPS (Global Positioning System) und/oder DGPS (Differential Global Positioning Systems) - Einrichtungen zur Bestimmung der Überwachungsposition beziehungsweise eines Referenzpunkts in Weltkoordinaten.

Einrichtung zur Erfassung von Galileo-Signalen, also Galileo-Empfänger zur Bestimmung der Überwachungsposition beziehungsweise eines Referenzpunktes in Weltkoordinaten. Die genannten Einrichtungen zur Bestimmung der Überwachungsposition beziehungsweise des Referenzpunktes in Weltkoordinaten sind besonders gut geeignet bei der Kalibrierung von in Außenbereichen eingesetzten Überwachungskameras.

MEMS-Lagesensoren zur Bestimmung von Nick- und Wankwinkeln der Überwachungskameras. Derartige MEMS (Micro-Electro-Mechanical-System) sind bevorzugt aus einer Kombination aus mechanischen Elementen, Sensoren, Aktoren und/oder elektronischer Schaltung auf einem Substrat beziehungsweise Chip gebildet. Durch die MEMS können beispielsweise Beschleunigungssensoren oder Sensoren zur Bestimmung der Lage gebildet werden, um eine absolute Ausrichtung der Überwachungskamera bzw. der Kalibrierhilfsvorrichtung zu bestimmen.

Bevorzugt für den gleichen Zweck werden Pendellagesensoren in der Kalibrierungshilfsvorrichtung integriert.

Ferner werden alternativ oder ergänzend Vorrichtungen zur Bestimmung eines absoluten Kompasswinkels implementiert, insbesondere Gyrometereinrichtungen oder Kompasseinrichtungen.

Bei einer Weiterführung der Erfindung weist die Kalibrierungshilfsvorrichtung Mittel zur Ermittlung der relativen Position und/oder relativen Orientierung und/oder des relativen Öffnungswinkels der Überwachungskamera auf. Diese relativen Positionsinformationen werden in Relation zu lokalen Umgebungsobjekten ausgedrückt, also z.B. relativ zu einer Wand, Decke und/oder dem Boden in der näheren Umgebung der positionierten Überwachungskamera. Die Positionsinformationen betreffen bevorzugt Abstände oder Winkel zu den lokalen Umgebungsobjekten.

Die Mittel zur Ermittlung der relativen Positionsinformationen werden ebenfalls bevorzugt als MEMS-Sensoren oder Pendellagesensoren realisiert. Alternativ oder ergänzend wird eine Ortungseinrichtung auf Basis von WLAN-Signalen verwendet, wobei die Position von WLAN-Hotspots in Reichweite der Überwachungskameras insbesondere in Anlehnung an eine Kreuzortung ausgenutzt werden. Ergänzend oder alternativ können auch Ortungseinrichtungen auf Basis von UWB-Signalen (Ultra Wide Band) oder Radar, LIDAR etc. eingesetzt sein. Eine weitere Alternative oder Ergänzung bilden Vermessungseinrichtungen, insbesondere Laser- oder Ultraschallvermessungseinrichtungen, insbesondere zur Bestimmung einer relativen Höhe oder eines Profils in der direkten Umgebung der Überwachungskameras. Bevorzugt werden Vermessungseinrichtungen mit mindestens drei Messstrahlen eingesetzt. Es können auch Laser oder Ultraschall-Fächervorrichtungen zur Vermessung des Öffnungswinkels der Überwachungskameras Verwendung finden.

Bei einer Weiterführung der Erfindung werden Mittel zur Bestimmung der absoluten Positionsinformation mit Mitteln zur Bestimmung von relativen Positionsinformation miteinander kombiniert: Beispielsweise werden Gyro-Einrichtungen und Laser- oder Laserfächereinrichtungen für die Höhenvermessung bei schief angeordneter Überwachungskamera verwendet, wobei der Laser mit vertikaler Messebene mit Hilfe der Gyro-Einrichtung insbesondere lotrecht justiert wird. Oder es wird die gleiche Kombination zur Bestimmung der Überwachungsposition der Überwachungskamera in Innenräumen verwendet, wobei eine horizontale Laser- oder Laserfächereinrichtung mit Hilfe der Gyro-Einrichtung insbesondere waagrecht justiert wird.

Eine weitere Quelle für relative Positionsinformationen wird durch eine Auswerteeinrichtung gebildet, die zur Ermittlung von relativen Positionsinformationen auf Basis von absoluten Positionsinformation und Umgebungsinformationen, insbesondere digitalen Umgebungskarten, ausgebildet ist. Dabei wird die absolute Kameraposition und Orientierung in die digitale Umgebungskarte eingetragen und als Ergebnis die relative Überwachungsposition der Überwachungskamera ausgelesen.

Alternativ oder ergänzend kann auch ein Abgleich zwischen aufgenommener Bildinformation der Überwachungskamera und Umgebungsinformationen, insbesondere dem Gebäudeplan, erfolgen, wobei durch den Abgleich ebenfalls die relative Position der Überwachungskamera bestimmt wird (Video-Map-Matching).

Bei einer bevorzugten Weiterbildung der Erfindung ist die Überwachungskamera über ein kabelloses oder kabelgebundenes Netzwerk mit einer insbesondere stationären Aufzeichnungs- und/oder Auswertevorrichtung verbunden und/oder verbindbar. Damit bildet die Überwachungskamera einen Teil einer Videoüberwachungsvorrichtung, welche eine oder mehrere Überwachungskameras nach eben beschriebener Art und die Aufzeichnungs- und/oder Auswertevorrichtung umfasst. Insbesondere ist die Aufzeichnungs- und/oder Auswertevorrichtung zur Durchführung von Algorithmen zur Objekt-Segmentierung und/oder zum Objekt-Tracking insbesondere programm- und/oder schaltungstechnisch ausgebildet.

Die Erfindung betrifft auch ein Verfahren zur Kalibrierung einer Überwachungskamera, insbesondere nach eben beschriebener Art, wobei in einem ersten Schritt globale oder absolute Positionsinformationen über eine stationäre Überwachungsposition der Überwachungskamera ermittelt werden. Die globalen Positionsinformationen umfassen insbesondere die Position in Weltkoordinaten, die absolute Orientierung in Kompasswinkeln und/oder den Nick- und/oder Wankwinkel. In einem zweiten Schritt werden relative Positionsinformationen ermittelt, indem die Globalpositionsinformation mit Umgebungsinformationen zusammengeführt werden. Die Umgebungsinformationen sind bevorzugt als digitale Umgebungskarten oder Gebäudeplan oder ähnliches ausgebildet.

Die relativen Positionsinformationen umfassen die Überwachungsposition der Überwachungskamera relativ zu dem Übenwachungsbereich, also zum Beispiel relativ in einem Zimmer oder relativ zu einer Kreuzung. Insbesondere sind über die relativen Positionsinformationen Abstände zwischen der Überwachungskamera und Differenzobjekten in dem Überwachungsgebiet entnehmbar, so dass die Überwachungskamera für das Überwachungsgebiet kalibriert werden kann.

In einem weiteren, optionalen Schritt wird die derart ermittelte relative Positionsinformation mittels einer Vermessung der relativen Position und/oder relativen Ausrichtung der Überwachungskamera in dem Überwachungsgebiet verfeinert und/oder korrigiert.

Bei einer bevorzugten Ausführung des Verfahrens erfolgt die Bestimmung der globalen Positionsinformation vor dem Beginn des Überwachungsbetriebs, das heißt vor der Aufnahme von Bildinformationen, durch die Überwachungskamera. Bei einer Weiterbildung der Erfindung werden durch die Kalibrierungshilfsvorrichtung regelmäßig Positionsinformationen zur Kalibrierung beziehungsweise Kalibrierungsüberprüfung nachgeliefert.

Bei einer weiteren Ausbildung der Erfindung ist vorgesehen, dass die Überwachungskamera im unverbauten Zustand die letzte bekannte globale Position, zum Beispiel als GPS-Signal, abspeichert und darauf folgende Bewegungsinformationen, die durch den Transport der Überwachungskamera zur ihrer Überwachungsposition entstehen, aufnimmt. Durch Abgleich dieser Informationen mit Umgebungsinformationen, insbesondere einem Gebäudeplan, kann die globale Position innerhalb eines Gebäudes bestimmt werden (Tracked-Map-Matching). Während des Überwachungsbetriebs ist es jedoch vorgesehen, dass die stationäre Überwachungsposition unverändert relativ zu dem Überwachungsgebiet verbleibt.

Zudem wird die Verwendung der offenbarten Überwachungskamera für den stationären Überwachungsbetrieb beansprucht, insbesondere in Verbindung mit dem offenbarten Verfahren.

Weitere Merkmale, Vorteile und Wirkungen der Erfindung ergeben sich aus der nachfolgenden Beschreibung bevorzugter Ausführungsbeispiele sowie der anhängenden Figuren. Dabei zeigen:

### Kurze Beschreibung der Zeichnungen

- Figur 1: eine schematisch seitliche Draufsicht auf eine Überwachungskamera als ein Ausführungsbeispiel der Erfindung;
- Figur 2: ein Flussdiagramm einer Kalibrierung der Überwachungskamera in Figur 1 als ein erstes Ausführungsbeispiel des erfindungsgemäßen Verfahrens;
- Figur 3: ein Flussdiagramm einer Kalibrierung der Überwachungskamera in Figur 1 als ein zweites Ausführungsbeispiel des erfindungsgemäßen Verfahrens.

### Ausführungsform(en) der Erfindung

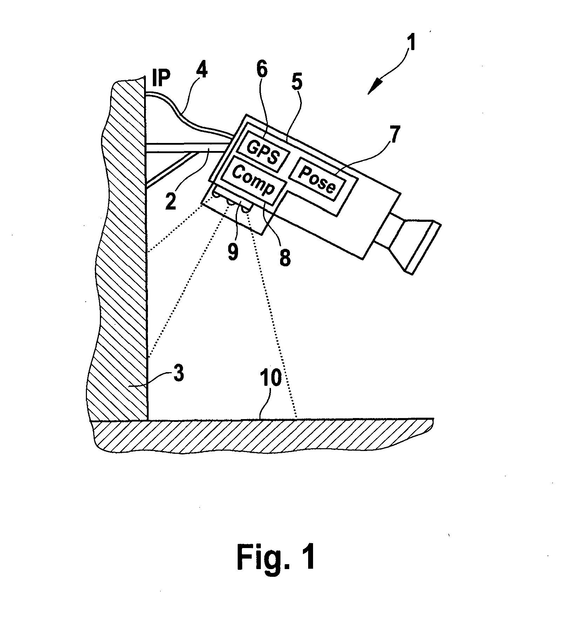

Die Figur 1 zeigt in einer schematischen, seitlichen Draufsicht eine Überwachungskamera 1, die ortsfest beziehungsweise stationär mittels einer Befestigungseinrichtung 2 an einer Wand 3 befestigt ist. Die Überwachungskamera 1 ist über ein Kabel 4 mit weiteren, nicht gezeigten Überwachungskameras und/oder mit einer ebenfalls nicht gezeigten Aufzeichnungs- und/oder Auswertungseinrichtung verbunden.

Die Gesamtheit der Überwachungskameras, des Netzwerks und die Aufzeichnungs-und/oder Auswertungseinrichtung bildet ein Videoüberwachungssystem. Derartige Videoüberwachungssysteme werden beispielsweise zur Überwachung von Ortsteilen, Straßen aber auch öffentlichen oder privaten Gebäuden, wie zum Beispiel Museen, Schulen, Universitäten oder ähnlichem eingesetzt.

Eine Kalibrierung der Überwachungskamera 1 dient dem Zweck, dass in Pixel gemessene Größen von Objekten in den Bilddatenströmen der Überwachungskamera 1 in metrische Einheiten umgerechnet werden können. Auf diese Weise kann für ein detektiertes Objekt die tatsächliche physikalische Größe angegeben werden. Ebenso ist es dann möglich, Geschwindigkeiten oder Beschleunigungen des Objekts in metrischen Größen anzugeben. Üblicherweise verwendete metrische Größen sind Meter für Längeneinheiten und Sekunden für Zeiteinheiten.

Zur Umsetzung der Kalibrierung weist die Überwachungskamera 1 eine Kalibrierungshilfsvorrichtung 5 auf, die in der Überwachungskamera 1 integriert angeordnet ist. Bei alternativen Ausführungsformen ist es auch möglich, dass die Kalibrierungshilfsvorrichtung 5 als abnehmbares Modul ausgebildet ist, so dass das Kalibrierungshilfsmodul 5 zur Kalibrierung von mehreren, verschiedenen Überwachungskameras einsetzbar ist. Hierzu weist das Kalibrierungshilfsmodul 5 beziehungsweise die Überwachungskamera 1 eine mechanische Schnittstelle auf, die ein reproduzierbare und/oder kalibrierte Aufnahme der Kalibrierungshilfsvorrichtung 5 auf der Überwachungskamera 1 ermöglicht.

Das Kalibrierungshilfsmodul 5 weist bei dem Ausführungsbeispiel in der Figur 1 vier Sensoren und zwar einen ersten Sensor 6, der als GPS-Empfänger oder DGPS-Empfänger ausgebildet ist, einen zweiten Sensor 7, der als 3-Achsen-Lagesensor realisiert ist, einen dritten Sensor 8, der als elektronischer Kompass verkörpert ist, sowie einen vierten Sensor 9, der als mehrstrahliger, z.B. dreistrahliger Laserentfernungsmesser aufgebaut ist.

Mittels der erstgenannten drei Sensoren 6, 7 und 8 der Kalibrierungshilfsvorrichtung 5 ist es möglich, die absolute Position und die absolute Ausrichtung der Überwachungskamera 1 in Weltkoordinaten messtechnisch zu erfassen: Der erste Sensor 6 registriert dabei die absolute Position der Überwachungskamera 1 in Weltkoordinaten. Der zweite Sensor 7 registriert - ebenfalls absolut - den Neigungs- und/oder Wankwinkel der Überwachungskamera 1, der dritte Sensor 8 erfasst die absolute Orientierung oder Ausrichtung der Überwachungskamera 1. Bereits diese drei Sensoren 6, 7 und 8 sind somit in der Lage, die absolute Position und Orientierung der Überwachungskamera 1 in Weltkoordinaten zu erfassen.

Die registrierten Sensorinformationen werden - insbesondere im Falle einer abnehmbaren Kalibrierungshilfsvorrichtung 5 - mittels bekannter Schnittstellen, wie zum Beispiel USB, analoges Videokabel, seriell, Firewire, Ethernet oder über eine eigene Schnittstelle an die Überwachungskamera 1 oder über das Verbindungskabel 4 an die Aufzeichnungs-und Auswertungsvorrichtung (nicht dargestellt) übertragen. Im Falle der hier dargestellten integrierten Kalibrierungshilfsvorrichtung 5 erfolgt die Weitergabe der Sensordaten an die Überwachungskamera 1 bevorzugt intern. Alternativ ist vorgesehen, dass die Kalibrierungshilfsvorrichtung 5 Sensordaten zwischenspeichert, die erst zu einem späteren Zeitpunkt ausgelesen werden.

Die nicht dargestellte Auswertungsvorrichtung führt nach Erhalt der Sensordaten, insbesondere der Sensordaten über die absolute Position und Orientierung der Überwachungskamera 1, einen Abgleich mit abgespeicherten Umgebungsinformationen, die zum Beispiel in Form von digitalen Karten oder Gebäudeplänen abgespeichert sind, durch. Bei dem Abgleich wird die absolute Position und Orientierung der Überwachungskamera 1 in die Umgebungsinformationen eingetragen und das von der Überwachungskamera 1 überwachte Gebiet, also das Blickfeld der Kamera, ermittelt. Gegebenenfalls werden zur Ermittlung noch weitere Daten, wie zum Beispiel Kameraparameter, insbesondere optische Parameter, hinzugezogen. Auf Basis des berechneten Blickfelds der Kamera wird in einem weiteren Schritt die Kalibrierung der Überwachungskamera 1 durchgerührt.

Um Kalibrierungsfehler aufgrund von auftretenden Messungenauigkeiten zu minimieren wird mittels des vierten Sensors 9 eine relative Position und/oder Ausrichtung der Überwachungskamera 1 relativ zu seiner direkten Umgebung durchgeführt. Hierzu werden in dem vorliegenden Beispiel mehrere Laserstrahlen in Form eines Strahlenbündels ausgehend von der Überwachungskamera 1 bzw. der Kalibrierungshilfsvorrichtung 5 an die angrenzenden Wände 3 beziehungsweise an den Boden 10 geworfen und die entsprechenden Entfernungen zur Überwachungskamera 1 ermittelt. Diese relativen Positions- und/oder Orientierungsmessdaten werden in einem weiteren Schritt zur Feinkorrektur der Überwachungsposition der Überwachungskamera 1 genutzt.

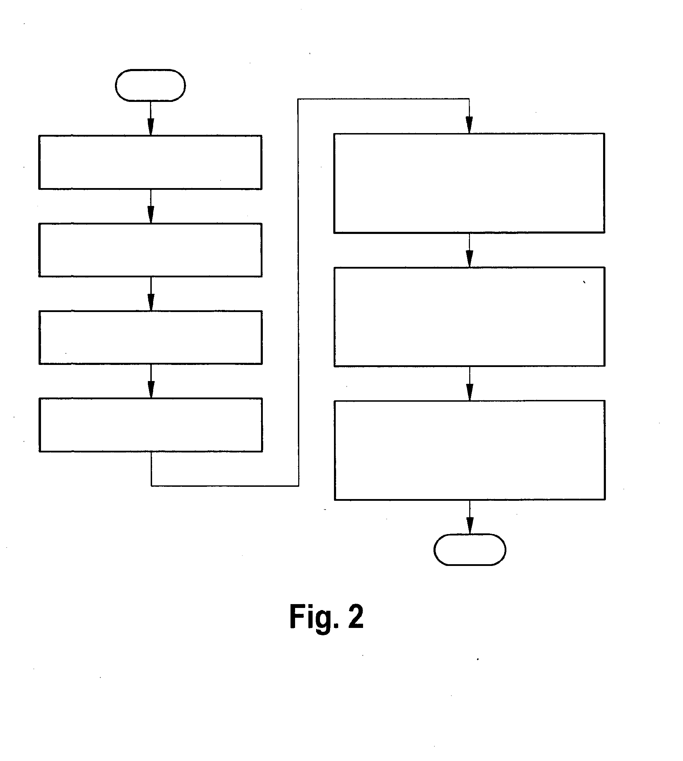

Die Figur 2 zeigt ein Flussdiagramm eines ersten Ausführungsbeispiels des erfindungsgemäßen Verfahrens, welches mit Hilfe eines Überwachungssystems beziehungsweise einer Überwachungskamera 1 wie sie in Figur 1 gezeigt ist, durchführbar ist. Nach dem Start des Kalibriervorganges wird in einem ersten Schritt ein GPS- oder DGPS-Signal eingelesen und ausgewertet und auf diese Weise die absolute Position der Überwachungskamera 1 in Weltkoordinaten bestimmt.

In einem zweiten Schritt werden Messdaten des Lage-Sensors 7 eingelesen, um den Kipp- und/oder Nickwinkel der Überwachungskamera 1 zu bestimmen.

In dem darauf folgendem Schritt wird der Kompass-Sensor 8 ausgelesen und auf Basis dessen Messdaten die Nord-Süd-Richtung der Überwachungskamera 1 bestimmt. Die eingelesenen Messdaten sind ausreichend, um die absolute Lage der Überwachungskamera 1 in Weltkoordinaten, insbesondere sechsdimensional, zu bestimmen.

In einem weiteren Schritt wird ein digitaler Raumplan oder eine digitale Umgebungskarte eingelesen und die absolute, messtechnisch erfasste Position und Orientierung der Überwachungskamera 1 eingetragen. Zur Minimierung von auftretenden Messungenauigkeiten wird dann in einem nächsten Schritt die relative Position der Überwachungskamera 1 in deren Umgebung bestimmt, indem die Entfernungen zu Wand und Boden mit einem mehrstrahligen Entfernungsmesser, insbesondere dem mehrstrahligem Laserentfernungsmesser 9 ausgemessen werden.

In einem weiteren Schritt erfolgt dann eine Feinkorrektur der Kameraposition und Orientierung durch ein Matching-Verfahren mit dem Raumplan bzw. der Umgebungskarte auf Basis der gemessenen Entfernungen zu Wand und Boden.

Nachdem die Kameraposition in dem digitalen Raumplan beziehungsweise in der digitalen Umgebungskarte nun hochgenau bestimmt ist, kann auf Basis des berechneten Blickwinkels der Überwachungskamera 1 der tatsächliche Blickwinkel der Überwachungskamera 1 in an sich bekannter Weise kalibriert werden.

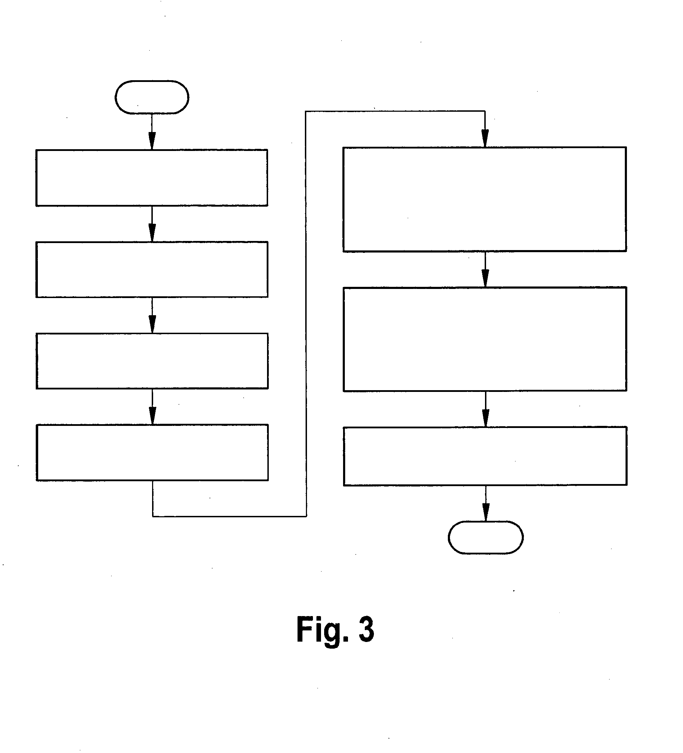

Die Figur 3 zeigt ein zweites Ausführungsbeispiel des erfindungsgemäßen Verfahrens in gleicher Darstellung wie in Figur 2, wobei ebenfalls die Überwachungskamera 1 in Figur 1 zur Umsetzung heranziehbar ist. Im Gegensatz zu dem Verfahren in der Figur 2 dient das Verfahren in Figur 3 zur Kalibrierung einer Überwachungskamera 1 im Außenbereich. Hierbei wird für die Feinkorrektur im Gegensatz zu dem Verfahren nach Figur 2 die Entfernung zwischen Überwachungskamera 1 und dem Boden mit einem oder dem mehrstrahligen Laserentfernungsmesser 9 aufgenommen.

Die Kalibrierung wird insbesondere vor dem Beginn des Überwachungsbetriebs durchgeführt. Zur Verifizierung oder Überprüfung der Kalibrierung können die gezeigten Kalibrierungsvorgänge aber auch während des Überwachungsbetriebs durchgerührt oder wiederholt werden. Der Überwachungsbetrieb ist aber dadurch gekennzeichnet, dass die Überwachungsposition der Kamera sich nicht oder nicht wesentlich ändert.

## Patentansprüche

1. Überwachungskamera (1),
wobei die Überwachungskamera (1) zur Überwachung an einer stationären Überwachungsposition positioniert und/oder positionierbar ist,
mit einer Kalibrierungshilfsvorrichtung (5), um eine Kalibrierung der Überwachungskamera zu unterstützen, ,
wobei die Kalibrierungshilfsvorrichtung (5) als Sensor- und Recheneinheit zur Ermittlung der stationären Überwachungsposition der Überwachungskamera ausgebildet ist, wobei die stationäre Überwachungsposition die absolute Position und die Orientierung der Überwachungskamera umfasst,
und mit einem Kalibriermodul zur Zusammenführung von Umgebungsinformationen in Form von digitalen Umgebungskarten oder digitalen Gebäudeplänen mit der durch die Kalibrierungshilfsvorrichtung (5) ermittelten stationären Überwachungsposition der Überwachungskamera (1) und zur Kalibrierung der Überwachungskamera auf Basis der stationären Überwachungsposition, wobei die Kalibrierung die Bestimmung von Umrechnungsfaktoren zwischen direkt aus den Bildern der Überwachungskamera (1) entnommenen Größen in metrische Größen betrifft,
wobei sowohl die Überwachungskamera (1) und die Kalibrierungshilfsvorrichtung (5) jeweils einen zueinander komplementär ausgebildeten mechanischen Anschluss aufweist, der eine reproduzierbare und/oder kalibrierte Montage der Kalibrierungshilfsvorrichtung (5) an der Überwachungskamera (1) erlaubt.

2. Überwachungskamera (1) nach einem der vorhergehenden Ansprüche, **dadurch gekennzeichnet, dass** die Kalibrierungshilfsvorrichtung (5) Mittel (6, 7, 8) zur Ermittlung der absoluten Position und/oder der Orientierung und/oder des Öffnungswinkels der Überwachungskamera (1) in Form von Weltkoordinaten umfasst.

3. Überwachungskamera (1) nach Anspruch 2, **dadurch gekennzeichnet, dass** die Mittel zur Ermittlung von absoluten Positionsinformationen in Form von Weltkoordinaten einen, mehrere und/oder alle der nachfolgenden Einrichtungen umfassen:
- Einrichtung (6) zur Erfassung von GPS und/oder DGPS Signalen;
- Einrichtung zur Erfassung von Galileo-Signalen;
- MEMS-Lagesensoren (7) zur Bestimmung von Nick- und Wankwinkel;
- Pendellagesensoren zur Bestimmung von Nick- und Wankwinkel;
- Gyrometer-Einrichtung zur Bestimmung eines absoluten Kompasswinkels;
- Kompass-Einrichtung (8) zur Bestimmung des absoluten Kompasswinkels.

4. Überwachungskamera (1) nach einem der vorhergehenden Ansprüche, **dadurch gekennzeichnet, dass** die Kalibrierungshilfsvorrichtung (5) Mittel (9) zur Ermittlung der relativen Position und/oder der Orientierung und/oder des Öffnungswinkels der Überwachungskamera in Relation zu lokalen Umgebungsobjekten umfasst.

5. Überwachungskamera nach Anspruch 4, **dadurch gekennzeichnet, dass** die Mittel zur Ermittlung von relativen Positionsinformationen einen, mehrere und/oder alle der nachfolgenden Einrichtungen umfassen:
- MEMS-Lagesensoren zur Bestimmung von Nick- und Wankwinkel;
- Pendellagesensoren zur Bestimmung von Nick- und Wankwinkel;
- Ortungseinrichtung auf Basis von WLAN-Signalen;
- Ortungseinrichtung auf Basis von UWB-Signalen;
- Vermessungseinrichtung (9), insbesondere Laser- oder Ultraschallvermessungseinrichtung;
- Laser-Fächervorrichtung zur Vermessung des Öffnungswinkels.

6. Überwachungskamera (1) nach einem der vorhergehenden Ansprüche, **gekennzeichnet durch** eine Auswerteeinrichtung, die zur Ermittlung von relativen Positionsinformationen in Relation zu lokalen Umgebungsobjekten auf Basis der absoluten Positionsinformationen und der Umgebungsinformationen ausgebildet ist.

7. Überwachungskamera (1) nach einem der vorhergehenden Ansprüche, **dadurch gekennzeichnet, dass** die Überwachungskamera (1) über ein kabelloses oder kabelgebundenes Netzwerk (4) mit einer insbesondere stationären Aufzeichnungsvorrichtung verbunden und/oder verbindbar ist.

8. Verfahren zur Kalibrierung der Überwachungskamera (1), nach einem der vorhergehenden Ansprüche, **dadurch gekennzeichnet, dass** in einem ersten Schritt globale oder absolute Positionsinformationen über eine stationäre Überwachungsposition der Überwachungskamera (1) ermittelt werden und in einem zweiten Schritt relative Positionsinformationen in Relation zu lokalen Umgebungsobjekten durch Zusammenführung der globalen Positionsinformationen und der Umgebungsinformationen ermittelt werden.

9. Verfahren nach Anspruch 8, **dadurch gekennzeichnet, dass** in einem dritten Schritt die relativen Positionsinformationen mittels einer Vermessung einer relativen Position und/oder relativen Ausrichtung der Überwachungskamera (1) korrigiert werden.

10. Verwendung einer Überwachungskamera (1) nach einem der Ansprüche 1 bis 7 für die Überwachung von einer stationären Überwachungsposition.

## Claims

1. Monitoring camera (1) in the case of which the monitoring camera (1) is positioned and/or positionable for monitoring at a stationary monitoring position, having a calibration tool (5) for supporting a calibration of the monitoring camera, the calibration tool (5) being designed as a sensor unit and arithmetic logic unit for determining the stationary monitoring position of the monitoring camera, the stationary monitoring position comprising the absolute position and the orientation of the monitoring camera, and having a calibration module for collating ambient information in the form of digital ambient maps or digital town maps with the stationary monitoring position, determined by the calibration tool (5), of the monitoring camera (1), and for calibrating the monitoring camera on the basis of the stationary monitoring position, the calibration relating to the determination of conversion factors into metric quantities between quantities extracted directly from the images of the monitoring camera (1), both the monitoring camera (1) and the calibration tool (5) respectively having a mechanical connection, designed in complementary fashion relative to one another, which enables a reproducible and/or calibrated mounting of the calibration tool (5) on the monitoring camera (1).

2. Monitoring camera (1) according to Claim 1, **characterized in that** the calibration tool (5) comprises means (6, 7, 8) for determining the absolute position and/or the orientation and/or the aperture angle of the monitoring camera (1) in the form of world coordinates.

3. Monitoring camera (1) according to Claim 2, **characterized in that** the means for determining absolute position information in the form of world coordinates comprise one, a plurality and/or all of the following devices:
- device (6) for detecting GPS and/or DGPS signals;
- device for detecting Galileo signals;
- MEMS position sensors (7) for determining pitch angle and roll angle;
- pendulum position sensors for determining pitch angle and roll angle;
- gyrometer device for determining an absolute compass angle;
- compass device (8) for determining the absolute compass angle.

4. Monitoring camera (1) according to one of the preceding claims, **characterized in that** the calibration tool (5) comprises means (9) for determining the relative position and/or the orientation and/or the aperture angle of the monitoring camera in relation to local ambient objects.

5. Monitoring camera according to Claim 4, **characterized in that** the means for determining relative position information comprise one, a plurality and/or all of the following devices:
- MEMS position sensors for determining pitch angle and roll angle;
- pendulum position sensors for determining pitch angle and roll angle;
- locating device on the basis of WLAN signals;
- locating device on the basis of UWB signals;
- measuring device (9), in particular a laser measuring device or ultrasound measuring device;
- laser fan device for measuring the aperture angle.

6. Monitoring camera (1) according to one of the preceding claims, **characterized by** an evaluation device which is designed to determine relative position information in relation to local ambient objects on the basis of the absolute position information and the ambient information.

7. Monitoring camera (1) according to one of the preceding claims, **characterized in that** the monitoring camera (1) is connected and/or connectable to an, in particular stationary, recording device via a wireless or cable network (4).

8. Method for calibrating the monitoring camera (1) according to one of the preceding claims, **characterized in that** in a first step global or absolute position information is determined via a stationary monitoring position of the monitoring camera (1), and in a second step relative position information is determined in relation to local ambient objects by combining the global position information and the ambient information.

9. Method according to Claim 8, **characterized in that** in a third step the relative position information is corrected by means of measuring a relative position and/or relative alignment of the monitoring camera (1).

10. Use of a monitoring camera (1) according to one of Claims 1 to 7 for monitoring a stationary monitoring position.

## Revendications

1. Caméra de surveillance (1),
la caméra de surveillance (1) étant positionnée et/ou pouvant être positionnée à une position de surveillance fixe en vue de la surveillance,
comprenant un dispositif d'aide au calibrage (5) pour assister lors d'un calibrage de la caméra de surveillance,
le dispositif d'aide au calibrage (5) étant réalisé sous la forme d'une unité de détection et de calcul servant à déterminer la position de surveillance fixe de la caméra de surveillance, la position de surveillance fixe incluant la position absolue et l'orientation de la caméra de surveillance,
et comprenant un module de calibrage destiné à regrouper des informations d'environnement sous la forme de cartes d'environnement numériques ou de plans de bâtiment numériques avec la position de surveillance fixe de la caméra de surveillance (1) déterminée avec le dispositif d'aide au calibrage (5) et destiné à calibrer la caméra de surveillance en se basant sur la position de surveillance fixe, le calibrage concernant la détermination de facteurs de conversion en grandeurs métriques des grandeurs relevées directement sur les images de la caméra de surveillance (1),
la caméra de surveillance (1) ainsi que le dispositif d'aide au calibrage (5) possédant respectivement un raccordement mécanique de configuration complémentaire l'un avec l'autre, lequel permet un montage reproductible et/ou calibré du dispositif d'aide au calibrage (5) sur la caméra de surveillance (1).

2. Caméra de surveillance (1) selon la revendication 1, **caractérisée en ce que** le dispositif d'aide au calibrage (5) comprend des moyens (6, 7, 8) destinés à déterminer la position absolue et/ou l'orientation et/ou l'angle d'ouverture de la caméra de surveillance (1) sous la forme de coordonnées universelles.

3. Caméra de surveillance (1) selon la revendication 2, **caractérisée en ce que** les moyens destinés à déterminer des informations de position absolue sous la forme de coordonnées universelles comprenant un, plusieurs et/ou la totalité des dispositifs suivants :
- un dispositif (6) de détection de signaux GPS et/ou DGPS ;
- un dispositif de détection de signaux Galileo ;
- des détecteurs de position MEMS (7) destinés à déterminer des angles de tangage et de roulis ;
- des détecteurs de position pendulaire destinés à déterminer des angles de tangage et de roulis ;
- un dispositif à gyromètre destiné à déterminer un angle de boussole absolu ;
- un dispositif à boussole (8) destiné à déterminer l'angle de boussole absolu.

4. Caméra de surveillance (1) selon l'une des revendications précédentes, **caractérisée en ce que** le dispositif d'aide au calibrage (5) comprend des moyens (9) destinés à déterminer la position relative et/ou l'orientation et/ou l'angle d'ouverture de la caméra de surveillance en relation avec des objets de l'environnement local.

5. Caméra de surveillance (1) selon la revendication 4, **caractérisée en ce que** les moyens destinés à déterminer les informations de position relative comprennent un, plusieurs et/ou la totalité des dispositifs suivants :
- des détecteurs de position MEMS destinés à déterminer des angles de tangage et de roulis ;
- des détecteurs de position pendulaire destinés à déterminer des angles de tangage et de roulis ;
- un dispositif de localisation sur la base de signaux WLAN ;
- un dispositif de localisation sur la base de signaux UWB ;
- un dispositif de mesurage (9), notamment un dispositif de mesurage au laser ou aux ultrasons ;
- un dispositif en éventail à laser destiné au mesurage de l'angle d'ouverture.

6. Caméra de surveillance (1) selon l'une des revendications précédentes, **caractérisée par** un dispositif d'interprétation qui est configuré pour déterminer des informations de position relative en relation avec des objets de l'environnement local sur la base des informations de position absolue et des informations d'environnement.

7. Caméra de surveillance (1) selon l'une des revendications précédentes, **caractérisée en ce que** la caméra de surveillance (1) est reliée et/ou peut être reliée par le biais d'un réseau (4) sans fil ou câblé avec un dispositif d'enregistrement, notamment fixe.

8. Procédé de calibrage de la caméra de surveillance (1) selon l'une des revendications précédentes, **caractérisé en ce que** dans une première étape sont déterminées des informations de position universelle ou absolue sur une position de surveillance fixe de la caméra de surveillance (1) et, dans une deuxième étape, sont déterminées les informations de position relative en relation avec des objets de l'environnement local par regroupement des informations de position universelle et des informations d'environnement.

9. Procédé selon la revendication 8, **caractérisé en ce que** dans une troisième étape, les informations de position relative sont corrigées à l'aide d'un mesurage d'une position relative et/ou d'une orientation relative de la caméra de surveillance (1).

10. Utilisation d'une caméra de surveillance (1) selon l'une des revendications 1 à 7 pour la surveillance d'une position de surveillance fixe.
